# EUROPEAN PATENT APPLICATION

(11) **EP 1 096 402 A2**
(43) Date of publication of application: **02.05.2001**
(21) Application number: 00121595.3
(22) Date of filing: 02.10.2000
(51) Int. Cl.: G06F 17/60

(54) **Three dimensional technical analysis**

(30) Priority: 28.10.1999 DE 19951880
(71) Applicant: Sieper, Hartmut, 65527 Niedernhausen (DE)
(72) Inventor: Sieper, Hartmut, 65527 Niedernhausen (DE)
(74) Representative: Rupp, Christian, Dipl.Phys.

(57) **Abstract**

For the representation of technical analysis data in a virtual reality world (10) having three coordinates (11, 12, 13) on a display, a respective technical analysis parameter (14, 15, 16) is associated with each of the coordinates. Technical analysis data are represented both by the spatial position and dimensions of three dimensional data bodies (17).

The coordinates can be subdivided into sectors (41, 42) to create at least two buy/sell evaluation sub-volumes (43). The presence of a data body visualising technical analysis data in one of these volumes represents a buy/sell recommendation. At least one harmonic of the technical analysis data is calculated and displayed together with the original technical analysis data.

## Description

The present invention is directed to a three dimensional chart technical analysis, and particularly to a virtual reality world for the display of technical analysis data items.

Financial analysts have to survey enormous quantities of financial information from which they pick out trends or which they judge to get a basis for a decision on whether to buy or sell certain values.

Most of the human minds are unable to grasp the course of a value by simply looking at its figures. Therefore graphical techniques are used to assist the human apprehension. Most of the analysts use two-dimensional charts usually showing the price versus the date. Additional, two-dimensional symbols indicate the interval between the opening and the closing price and the tendency of the price development.

Many technical analysts use personal computers or main frames to create graphical maps and charts to control their holdings. Some use real time data input as for example supplied by financial information providers such as Reuters or Dow Jones. Although many indicators can be calculated from the financial data, the ability of a financial analyst to follow the rapid progress in the development of a big plurality of traded items is very limited with the current techniques involved. Plotting more than one curve in a two dimensional chart instead of looking at several charts is only applicable to a certain limit and will likely lead with a already small number of curves involved to confusing display.

Visualising technical analysis data as objects in a three dimensional virtual reality world offers the analyst an interesting potential. The usage of the third dimension offers a special possibility to control a great amount of different items at the same time so that trends can be realised early based on a large amount of data thus allowing transactions at the right time, an important condition for increasing profit. Application programmable interfaces allow real time data exchange with information providers. Instead of scanning through a series of charts or lines of numerical data in a listed form the technical analyst employing virtual reality can intuitively follow the course of the items he is interested in.

Earlier developments like for example the commercially available software Metaphor Mixer from Maxus Systems International or the system describes in US 5,774,878 use virtual reality techniques to transform complex information of technical analytical aspect into graphical forms. To this purpose, an information landscape consisting of planar surface intersecting a continuos numerical axis oriented perpendicular to that surface is formed as information ground plane. Each axis of the information landscape is subdivided into certain sectors of a main category for example trading place or market sector so that at the intersection of sectors from two axis a cell is formed bearing the items with the characteristics of both sectors like e.g. shares of automobile companies traded at the Wall Street. Icons identify the items themselves like shares, options, warrants and so on.

The icon are geometrical primitives like for example triangles, squares or pentagons each one variable in size to represent for instance a small or a large cap stock. According to the value of the represented item the icons are positioned at different vertical values below or above the plane formed by the information landscape. The shade of the colour varies with the vertical position of the icons to reinforce the height effect.

Another approach for using the third dimension for a visualisation of technical analysis data is used by the company 3D StockCharts. Here, three-dimensional columns are used to display bid and ask prices and volumes on trading screens for online traders.

The current 3D stock charts allow the user to control a larger amount of items he is interested in than with two-dimensional charting techniques, but the information displayed about each technical analysis data item is limited to a few characteristic values, due to the nature of the icons or columns used.

It is therefore an object of the present invention to provide a new technique for the visualisation of technical analysis data wherein complex financial information containing a plurality of informational elements is displayed in an easy to comprehend manner.

This object is achieved by a method for the representation of technical analysis data in a virtual reality world having three coordinates on a display. A respective technical analysis parameter is associated with each of the coordinates. Technical analysis data are represented both by the spatial position and dimensions of three dimensional data bodies.

The data bodies can rotate around at least one rotational axis, wherein the rotation direction and/or the rotation speed represent technical analysis data.

The object is further achieved by a method for the representation of technical analysis data in a virtual reality world having three coordinates on a display. The coordinates are subdivided into sectors to create at least two buy/sell evaluation sub-volumes, and the presence of a data body visualising technical analysis data in one of these volumes represents a buy/sell recommendation.

Further the object is achieved by a method for the representation of technical analysis data in a virtual reality world having three coordinates on a display. At least one periodic cycle of the technical analysis data is evaluated and displayed together with the original technical analysis data. A future development of a technical analysis data value is estimated by at least one characteristic pattern displayed in the virtual reality world and obtained from past values of the respective technical analysis data by means of Fourier Transformation.

The time constant of the at least one periodic cycle displayed in addition to the original technical analysis data is prefixed.

Furthermore the object is solved by a computer software program adapted to perform a method described above when executed on a computer.

The proposed display technique for one allows the linking of information elements associated with the technical analysis data to the dimensions of the virtual reality world, and further allows the linking of these information elements to each characteristic of a data body representing the technical analysis data within the virtual world. The transformation of a plurality of values associated with a technical analysis data item to the shape and position of a data body advantageously makes use of the highly developed visual recognition abilities of the human mind to convey complex financial information. Subdividing the virtual reality world into separate volumes of a special meaning further aids the analyst in his decisions. With the analysis of characteristic patterns of a given chart the financial analyst holds a tool to judge the future trends of his objects of interest.

Further advantageous features are claimed in the respective sub-claims.

Advantageously additional information can be carried by surface characteristics of the data bodies so that special colours or hatch patterns mapped on those surfaces represent certain values of analytical interest. In a particular advantageous embodiment of the present invention the data bodies have the form of a parallelepiped, which geometrical dimensions can easily be grasped by any human.

Advantageously the spatial position of the parallelepiped represents a first value of technical analysis data like for instance the price of the object at a certain time, the vertical dimension of said parallelepiped represents a second value of technical analysis data, like for example the difference between an opening and closing price and the depths dimension of the parallelepiped represents a third value of technical analysis data like for example the traded volume of that item.

The surface characteristics of the top and/or bottom surfaces indicate advantageously a characteristic related to that first value of technical analysis data, for example the sign of the price difference. Displaying the data bodies translucently and/or transparently advantageously allows the observation of data bodies in the background of the virtual reality world while partially or completely covered by data bodies in the foreground. Adding an upper and a lower line to the data body extending from its top respective bottom surface advantageously adds the possibility of displaying additional information of technical analysis data.

In a further advantageous embodiment of the present invention the first value of technical analysis data is a subset of data given by the coordinate values of the position of the data body within the virtual reality world and the second value of technical analysis data identifies the magnitude of the difference between closing and opening price and a third value of technical analysis data indicates the trading volume associated with the object, and the forth value of technical analysis data shows the highest price of a time period, and the fifth value of technical analysis data shows the lowest price of a time period.

In an alternative embodiment the data bodies are advantageously positioned in respect to a horizontal datum plane, whereby the vertical dimensions of the data bodies above the datum plane represent a fourth value of technical analysis and the vertical dimensions of the data bodies below the datum plane represent a fifth value of technical analysis, and a horizontal dimension of said data bodies represents an sixth value of technical analysis. This way, two sectors are formed in one dimension of the data body representing different values, which can easily be recognised by its relative position to the datum plane, whereby the combination of the two sectors represents an additional value.

Advantageously the first value of technical analysis data is a subset of data given by the coordinate values of the position of the data body, and the second value of technical analysis data indicates the leverage factor of an option or warrant, and the third value of technical analysis data indicates the open interest value or traded average volume value, respectively, and the fourth value of technical analysis data indicates the premium of an option or warrant and the fifth value of technical analysis data indicates the intrinsic value of an option or warrant, and the sixth value of technical analysis data indicates the respective open interest value or traded average volume value not used as the third value, and a colour of the data body part above the datum plane differs from that of the data body part below the datum plane, so that all relevant values and parameters associated with the trading of options and warrants can be controlled simultaneously.

Advantageously the development of the spatial position of the data bodies can be traced by periodically updating the values of the data bodies and/or a sequence based on the characteristics of the data bodies at a past time interval can be defined and displayed at a user defined processing speed for visualising the development of the data bodies in the past, so that either the analyst can control the objects of his interest in a real time display or obtain additional information from observing the developments in the past.

Advantageously the space of the virtual reality world is divided into more than two sub-volumes so that the presence of a data body in a volume different to a buy/sell volume represents a neutral recommendation, allowing the financial analyst a more detailed judgement. With the data bodies and characteristic features of the virtual reality world taking on colours or patterns dependent on the assignment to one of the sub-volumes a user can easily identify the recommendation associated with the position of the data body. Visualising the development of the characteristics of the data bodies in real time or in the past enables the analyst to react quickly to trends and current developments on a profound basis.

In the following description, the present invention is explained in more detail in relation to the enclosed drawings, in which
Fig. 1 is a graphical representation of a virtual reality world according to the present invention showing two data bodies on two different positions in a space formed by three coordinate axis one representing date, one price and one open interest,
Fig. 2 shows a data body according to a special embodiment of the present invention along with the definition of its forming elements,
Fig. 3 shows a virtual reality world for controlling options and warrants,
Fig. 4 shows a merchandising virtual reality world for aiding on buy/sell decisions, and
Fig. 5 shows a virtual reality world for chart analysis (cycle analysis).

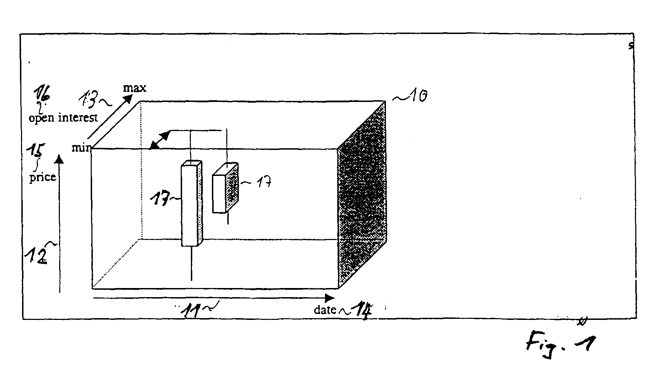

A special embodiment of the present invention is shown in Fig. 1. A virtual reality world 10 is based on three dimensions 11, 12, 13 with the time or date 14 on the x- or horizontal coordinate 11, price 15 on the y- or vertical coordinate 12 and open interest 16 on the z-or depth coordinate 13. Within this space generated by the three dimensions 11, 12 ,13 each technical analysis value (like shares or stock options of a certain company etc.) is displayed in the form of a data body 17 formed by a rectangular prism like a parallelepiped 17. The width of the data body 17 is constant for all data bodies 17 and carries no special information according to this example.

Advantageously the width of the data body 17 is approximately that of a singular unit on the horizontal coordinate axis 11. The vertical extension 23 of the data body 17 is proportional to the difference between the open and the closing price of the technical analysis value and the orientation of the data body 17 within the space is such that the according values can be read from the vertical position of the upper respectively lower face of the data body 17 in respect to the price scale 15 given on the vertical axis 12 of this virtual reality world 10. The depth 24 of a data body 17 represents the trading volume within a chosen time period and varies with the variations in the figure of the volume.

On days with a very heavy volume, a data body 17 might extent too far in the depth direction 13 for yielding any useful information to an observer. Therefore, the extension 24 of the data bodies 17 in the depth direction 13 may be limited to a maximum value, which can be calculated e.g. by using a long term moving average and adding a certain percentage above it. This gives the observer sufficient information to spot days with very heavy volume and days with a thin volume by keeping visualisation of the data simple and easy to comprehend.

The various parameters 14, 15, 16 of a technical analysis value a function of time 14 as well as a function of the length of a time interval on which they are based. Therefore, the scaling for the respective dimensions of the virtual reality world 10 has been adapted to the time interval chosen. Usually, the values associated with different technical analysis parameter values are different so that the data bodies 17 representing those technical analysis values show a different size and are located at different positions in the virtual reality world 10.

In the snap shot of a system according to the present invention as given in Fig. 1 both data bodies 17 have identical z-positions thus indicating that their open interest figures are equal, while different depths of the data bodies 17 indicate different trading volumes, a higher one for the technical analysis parameter represented by data body 17 on the right and a lower one for the parameter represented by the data body 17 on the left. Further both data bodies 17 differ in height, whereby the left data body shows a larger spread between the opening and the closing price.

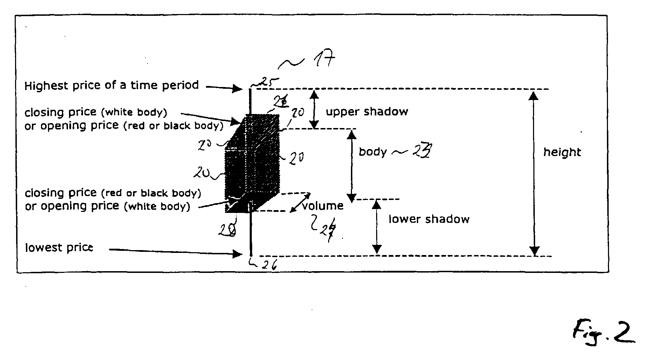

In Fig. 2 a detailed view of a data body 17 along with a definition of its elements is given. The base 20 of the body is formed by a rectangular prism with edges respectively oriented in parallel to the three axis of the coordinate system. In case, the opening price of the underlying technical analysis parameter has been lower than the closing price for the time interval chosen, the value of the opening price is given by the vertical position of the bottom surface 22 and the price value for the closing price is given by the vertical position of the top surface 21. If the price of the respective item has fallen within the chosen time interval, then the position of the top surface 21 corresponds to the opening, while the position of the bottom surface 22 corresponds to the closing price value. Thus, only from the position of the two surfaces 21, 22 (having different colours, brightness etc.) an observer will be unable to see if the value of an item has been subject to a rise or fall in price.

Therefore, at least the bottom and the top surface of the rectangular base body 20 will be rendered with a solid colour or a special pattern to indicate the tendency of the price development. In an alternative embodiment all peripheral surfaces of the rectangular prism will be used to visualise the price tendency as described for the two surfaces 21, 22.

Further, displaying data bodies 17 translucently or transparently avoids that data bodies located in the front of the virtual world 10 will hide data bodies 17 located in the back.

To indicate the highest or the lowest price for a given time period, a line 25, 26 is added to the corpus of the data body 17 extending from the centre of the top surface 21 vertically to a certain y-position representing the highest price and a second line extending from the centre of the bottom surface 22 vertically downwards to a y-position indicating the lowest price. The region above the corpus of the data body 17 containing the upper part of the line 25 is denoted upper shadow and the corresponding region below the corpus accordingly lower shadow. The total height of the data body 17 given as the difference between the upper end of the upper part of the line and the lower end of the lower part of the line 26 indicates the absolute change of the price of the technical analysis parameter in the time interval defined.

Like described above, the depth dimension 24 of the corpus of the data body 17 is related to a certain value of the technical analysis parameter like for example the trading volume. The scaling of the depth dimension 24 might be the same than that used for the z-coordinate 13 of the virtual reality world 10, but can also be a different one.

The texture and/or the colouring of any of the peripheral surfaces of the rectangular prism 17 can be used for adding additional qualitative or quantitative information like i.e. the volatility of an analytical value to the representation.

Note that the representation of the data bodies is not necessarily static. As an alternative or additional degree of freedom for the representation of technical analysis parameter a rotational movement (without displacement) around at least one rotation axis can be used. The rotational speed(s) can also serve for the representation of at least one technical analysis parameter.

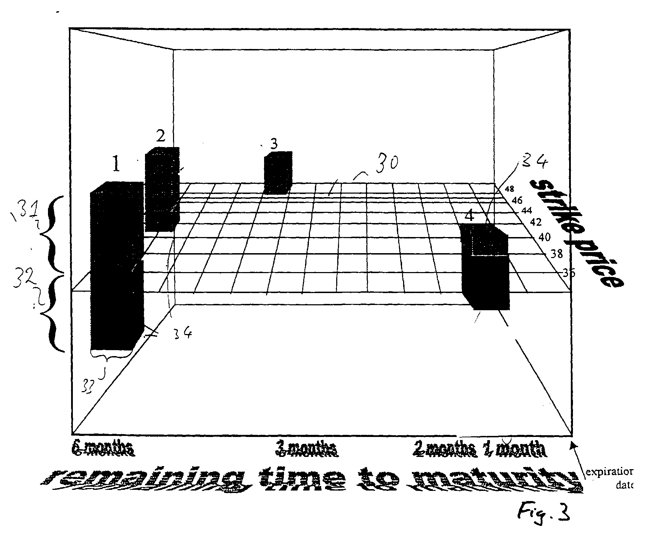

Fig. 3 shows a further embodiment of the present invention optimised for the observation of traded options and warrants in financial markets. A datum plane 30 laid out in parallel to the ground plane formed by the horizontal and depths axis with a grid like scaling is placed at a certain height of the virtual reality space 10. The data bodies 34 in form of rectangular prisms are arranged such that the datum plane 30 divides their bodies in two parts, the upper one 31 extending in the semi-space above the datum plane 30 and the lower one 32 extending in the semi-space below.

Note that additionally or alternatively to the prisms bodies with other shapes such as f.e. cylinders can be used.

In the preferred embodiment shown in Fig. 3, the dimensions of the underlying virtual reality 10 are the time remaining to for the options or warrants to maturity (horizontal axis), the strike price (depths axis), and the special values inherent to options and warrants (vertical axis). The position of each value on the depth coordinate of the datum plane 30 is determined by its strike price and the time remaining to maturity. The premium value of options and warrants are represented in the semi-space above the datum plane 30 and the respective intrinsic values are shown in the semi-space below that plane. The total height of a data body 34 as determined by the sum of its premium and intrinsic value renders the leverage factor, defined as the percentage of the capital employed in relation to the underlying capital. The scaling of the vertical axis is a function of the maximum positive and negative figures of the premium and intrinsic values involved. The distance from the origin of the horizontal scale on the right side indicates the remaining time to maturity, so that the right wall of the shown virtual room signifies the expiration date of the parameters.

The scale on the depths coordinate shows the strike prices. Higher strike prices are displayed at higher z-values. Were the market price equals the strike price or in other words were the options are 'at the money', a line parallel to the horizontal coordinate axis divides the datum plane in two separate areas, one symbolising that the options are 'in the money' the other indicating that the options are "out of the money". In the example given in Fig. 3, the region defining the "out of the money" status of an option or warrant is behind the discriminating line and the "in the money" region is the front part of the datum plane 30. The discriminating line itself stands for the "at the money" status. Rendering the surface of a data body 34 with a certain colour or texture indicates if the option is below or above the fair value. With the slight variation in the shade of the colour or the details of the pattern an easy distinction between the premium and the intrinsic value will be achieved.

In the embodiment of Fig. 3 option number 4 standing short off the expiration date is above, while the other three options positioned on the left are below the fair value. The fair value is calculated from certain parameters by specific formulas like for example the Black-Scholes-Formula. Additional text information can be applied above each column informing of special values like the average factor, the implied volatility and/or the price sensitivity or delta factor, respectively.

A traded average volume of an option or warrant and its open interest can be displayed by the thickness of a column, whereby the depths is related to the average volume and the breadth of the column is related to the open interest figure or vice versa. To obtain the underlying numerical figures, a second x- and z-value scaling might be implemented within the virtual reality world 10.

In an alternative embodiment, a scale is added to each of the edges of the data bodies 34. The options designated as 1, 2 and 3 in Fig. 3 have a texture indicating that the price is under the fair value. The different texture of option 4 indicates that it is traded above its fair value. Options 1, 2 and 4 in front of the discriminating line show an intrinsic value and a premium. In contrary hereto, Option 3 behind the discriminating line with a strike price of 48 being above the current price of the underlying lacks any intrinsic value.

To provide the analyst with a technical tool to uncover complex relationships between different technical, fundamental and quantitative parameters, a further embodiment employs a closed volume three-dimensional system, subdivided in several sub-volumes of special interest. Each technical analysis data item is displayed as a data body within this type of virtual reality system. Like for the other embodiments, a dimension of the space can be based on prices for which normally the vertical y-axis will be used, or time data like minutes, days, weeks, months or years (normally implemented on the horizontal x-axis) or it can be based on special indicators, like e.g. indicators calculated on prices, volume or open interest, indicators based on sentiments derived from polls or market indicators or derived from data published by the stock exchanges or information providers, but can also be based on fundamental indicators as for example the price/earnings-ratio, price/book value, price/cash-flow ratio or growths rates or any other indicator useful.

Furthermore statistical data like the standard deviation, the relative strength, the correlation or the beta factor can be used as a basis for one of the dimensions. Even interest rates or parameters of mechanical trading systems or trading strategies or money management tools form a suitable basis for a dimension of the virtual reality world. The freedom of combining technical, quantitative fundamental, and other parameters offers the analyst a unique possibility of combining the different worlds of the technical, quantitative and the fundamental analysis in a very simple model.

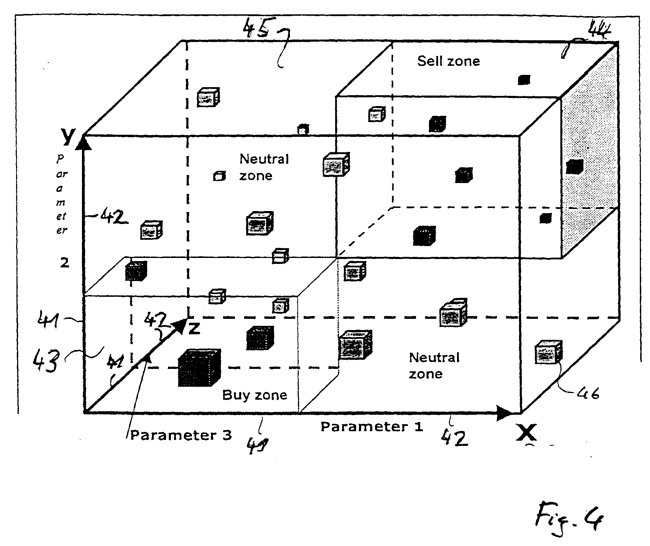

One of these models is shown in Fig. 4. Herein, three criteria linked with a technical analysis data item give the position of a data body 46 in the space formed by the three coordinate axis x, y and z representing the judgement criteria of the virtual reality world. To better locate the single items 45, a stereoscopic viewing facility might be favoured instead of a projective or perspective display of the 3D virtual reality.

Each coordinate axis in the shown example is subdivided in two sectors 41,42, but a subdivision in more than two sectors can be appropriate for more complex analytical situations. The different coordinate axis might also show different numbers of sectors. It is to be mentioned that the size and form of the data bodies 46 can carry additional information of technical analytical value. In the example of Fig. 4 the different sectors 41, 42 of the axis are marked by different colours or different shades of a colour.

The data bodies move 46 around in the space formed by the three coordinates according to the changes in their underlying values. The sub-sectors 41, 42 of the different coordinate axis create a plurality of sub-volumes 43, 44 ,45 in the formed space each one carrying a special meaning or a recommendation to the analyst.

In the described example three different sub-volumes 43, 44 ,45 are generated by sectorizing the three axis. Data bodies 46 entering or being present in the bottom left sub-volume 43 are considered to be present in a buy zone or in other words the values they represent are considered undervalued and worth to be purchased. The sub-volume 44 adjoining the top right corner at the back of the enclosing volume is considered a sell zone and data bodies 46 enclosed therein are considered overvalued and should probably be sold. Data bodies 46 being present in the not yet described sub-volume 45 of the enclosing volume, in other words data bodies 46 being neither present in the buy nor in the sell zone are considered for recommending no special action.

The technical analysis data representing data bodies 46 will move around in the enclosing volume according to the chronological changes in the values of the underlying technical analysis data. This way, an analyst can easily control a number of different technical analysis parameters by simply watching in which sub-volume 43, 44, 45 the respective data bodies 46 are just present. The colour and/or the texture of the surfaces of a data body 46 can change expressing its assignment to one of the different sub-volumes 43, 44, 45. For example, a data body located in the buy zone 43 will be displayed in a green colour, while a data body 46 located in the sell zone 44 will show a red surface and the data bodies in the neutral zone 45 will indicate that no further action is required by a yellow colouring. Instead of number crunching the system according to the present invention provides the analytical observer with a comprehensible graphical tool for surveying and judging a plurality of different technical analysis parameters in real time.

It is to be noted that the data bodies must not necessarily have the form described above or look like cubes 46 as in Fig. 4, but can also have other forms like spheres, pyramids or take the form of any polyeder and can even be just a combination of any linear and/or planar geometric primitive and also a combination of these figures with any three dimensional body by selecting a special form or combining several forms for defining a data body, its shape being a further carrier of additional information. For example, a sphere might symbolise an index value, while single stocks are displayed as rectangular prisms and options will be represented by a pentagon separating two cylinders.

In an especially advantageous embodiment of the present invent, further information which is not represented by the shape, appearance or position of a data body, can be called via an action value attached to the data bodies such, that by right clicking with the mouse on the according graphical object a context menu will be opened, offering special tasks available for the data body. In further embodiments, the context menu additionally offers a selection of properties, configurations and attributes. Alternative embodiments allow the viewing of additional information by simply clicking or double clicking or right clicking with the mouse at a data body, with the requested information then presented graphically or in the form of a list within a separately opened window.

Several tools are provided for a better access to the data displayed in the virtual world. To identify items that meet certain criteria an analyst can automatically search for related graphical objects and highlight them. Further, the user can choose a time in the past to view a historical status of his virtual reality world. It is also possible that a data body refers not only to a single technical analysis data item but a plurality of it whereby the dimensions of the data body represent a weighted value of the various contributors. A "spaceflight" tool enables the analytical observer to 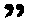 fly" through the scenery like a space craft through the open space enabling the analyst to view the different elements of his virtual reality world from different perspectives.

The course of such a flight can be recorded by a macro and replayed later. A recorded flight can be modified later in order to accelerate or decelerate for instance the flight velocity appropriately for a presentation. Further animations are possible by defining a time period for the recording, the recording parameters and a value for the processing speed.

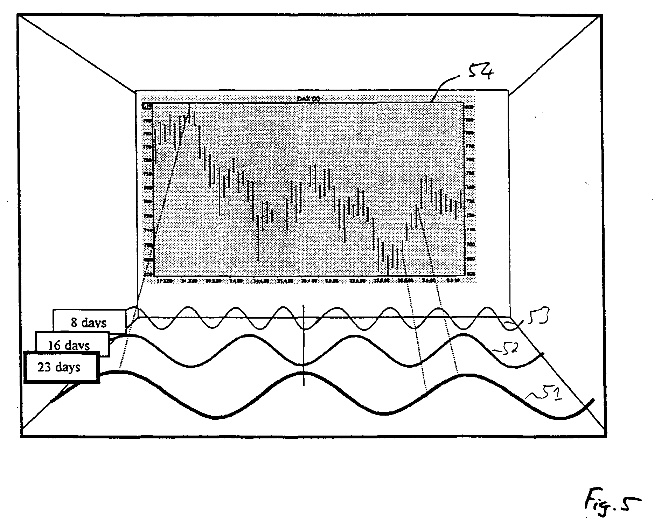

Another embodiment of the present invention visualises periodical patterns hidden in the graph of a chart. As can be seen from Fig. 5 the chart 54 to be analysed is "pinned" to the background of a closed virtual reality space and all its idealised dominant cycle components 51, 52,53 are plotted as a family of curves in the foreground above ground plane, whereby each curve 51, 52 ,53 is displayed at a different z-coordinate. In a first order, the graph of the (original) chart 54 can be obtained by the superposition of the respective dominant cycles 51, 52 ,53. The cycles will be calculated by mathematical or statistical algorithms like for example by the Fourier Transformation. Therefore the different dominant cycles have essentially a sine wave signal shape with respectively different frequencies or time constants as well as different amplitudes. Cycles with larger amplitude therefore have a grater influence on the shape of the chart than cycles with smaller amplitude.

The time constants of the different dominant cycles (harmonics) 51,52, 52 in the example of figure 5 are as shown 8, 16, and 23 days (The dominant cycle with the time constant of 23 days has be determined with another method as the Fourier transform.).

Note that in addition or as an alternative to the calculation of time constants, at least some time constants can be prefixed as the technical analysis often uses cycles with prefixed time constants. In this case the amplitude and therefore the importance of the cycle with a prefixed time constant can be calculated. The corresponding cycle will the be displayed in the virtual reality space.

While the price chart ends on the last trading day, the future graph can be anticipated by extrapolating its underlying cycles 51, 52 ,53 beyond that date. Thus, by visual inspection or mathematical calculation, future tops or bottoms of the price chart can be predicted. A trough can for example be expected at a certain time, when all idealised dominant cycles 51, 52, 53 show a minimum. For the analyst this means, that the cycle will shortly after enter an up-phase. On the contrary, when all dominant cycles 51, 52 ,53 are at their maximum for a certain time value a down-phase will begin shortly.

## Claims

1. A method for the representation of technical analysis data in a virtual reality world (10) having three coordinates (11, 12, 13) on a display, wherein
a respective technical analysis parameter (14, 15, 16) is associated with each of the coordinates, and
technical analysis data are represented both by the spatial position and dimensions of three dimensional data bodies (17).

2. Method for the representation of technical analysis data according to claim 1,
**characterised in that**
the data bodies (17) rotate around at least one rotational axis, wherein the rotation direction and/or the rotation speed represent technical analysis data.

3. A method for the representation of technical analysis data in a virtual reality world (10) having three coordinates (11, 12, 13) on a display, wherein
a respective technical analysis parameter (14, 15, 16) is associated with each of the coordinates, and
technical analysis data are represented both by the spatial position and a rotational movement of three dimensional data bodies (17).

4. Method for the representation of technical analysis data according to anyone of the preceding claims,
**characterised in that**
furthermore the surface characteristics (20, 21, 22) of said data bodies (17) represent technical analysis data.

5. Method for the representation of technical analysis data according to anyone of the preceding claims,
**characterised in that**
said data bodies (17) have the form of a parallelepiped.

6. Method for the representation of technical analysis data according to claim 5, **characterised in that**
the spatial position of a parallelepiped (17) represents a first value of technical analysis data,
the vertical dimension (23) of said parallelepiped (17) represents a second value of technical analysis data, and
the depth dimension (24) of said parallelepiped (17) represents a third value of technical analysis data.

7. Method for the representation of technical analysis data according to claim 6, **characterised in that**
the surface characteristics of the top (21) and/or bottom (22) surface indicate a characteristic related to said first value of technical analysis data.

8. Method for the representation of technical analysis data according to one of the claims 1 to 7,
**characterised in that**
said data bodies (17) are displayed translucently and/or transparently.

9. Method for the representation of technical analysis data according to one of the claims 1 to 8,
**characterised in that**
an upper line extends vertically up from the top surface and/or a lower line extends vertically down from the bottom surface (22) of said parallelepiped with the position of said line endings (25, 26) opposite the periphery of the data body (17) representing a fourth respective fifth value of technical analysis data.

10. Method for the representation of technical analysis data according to one of the claims 6 to 9,
**characterised in that**
said first value of technical analysis data is a subset of data given by the coordinate values of the position of said data body, and
said second value of technical analysis data indicates the magnitude of the difference between closing and opening price, and
said third value of technical analysis data indicates the trading volume, and
said fourth value of technical analysis data indicates the highest price of a time period, and
said fifth value of technical analysis data indicates the lowest price of a time period.

11. Method for the representation of technical analysis data according to anyone of claims 6 to 9,
**characterised in that**
said data bodies are positioned in respect to a horizontal datum plane (30), whereby the vertical dimension of said data bodies above (31) said datum plane represents a fourth value of technical analysis, and
the vertical dimension of said data bodies below (32) said datum plane represents a fifth value of technical analysis, and
the horizontal dimension (33) of said data bodies represents an sixth value of technical analysis.

12. Method for the representation of technical analysis data according to claim 11,
**characterised in that**
said first value of technical analysis data is a subset of data given by the coordinate values of the position of said data body, and
said second value of technical analysis data indicates the leverage factor of an option or warrant, and
said third value of technical analysis data indicates the open interest value or traded average volume value, respectively, and
said fourth value of technical analysis data indicates the premium of an option or warrant, and
said fifth value of technical analysis data indicates the intrinsic value of an option or warrant, and
said sixth value of technical analysis data indicates the respective open interest value or traded average volume value not used as said third value, and
the colour of the data body part above the datum plane differs from the colour of the data body part below the datum plane.

13. Method for the representation of technical analysis data according to one of the claims 1 to 12,
**characterised in that**
- the development of the spatial position of said data bodies can be traced by periodically updating the values of the data bodies, and/or
- a sequence based on the characteristics of the data bodies in a past time interval can be defined and displayed at a user definable processing speed to visualise the development of the data bodies in the past.

14. Method for the representation of technical analysis data in a virtual reality world having three coordinates on a display, wherein
the coordinates are subdivided into sectors (41, 42) to create at least two buy/sell evaluation sub-volumes (43), and
the presence of a data body visualising technical analysis data in one of these volumes represents a buy/sell recommendation.

15. Method for the representation of technical analysis data according to claim 14,
**characterised in that**
a presence of said data body in a further sub-volume (45) different to a buy/sell volume represents a neutral recommendation.

16. Method for the representation of technical analysis data according to claim 14 or claim 15,
**characterised in that**
said data bodies and/or said coordinate sectors and/or said sub-volumes and/or peripheral surfaces of said sub-volumes take on a colour dependent on the assignment of their location to an above type of sub-volume.

17. Method for the representation of technical analysis data according to one of the claims 14 to 16,
**characterised in that**
the development of the characteristics of said data bodies can be traced by periodically updating the values of the data bodies and/or a sequence based on the characteristics of the data bodies in a past time interval can be defined and displayed at a user definable processing speed to visualise the development of the data bodies in the past.

18. Method for the representation of technical analysis data in a virtual reality world (10) having three coordinates on a display, wherein
at least one periodic cycle of the technical analysis data is calculated and displayed together with the original technical analysis data.

19. Method according to claim 18,
characterized in that
the at least one periodic cycle is displayed displaced in the Z-dimension in relation to the original technical analysis data.

20. Method for the representation of technical analysis data in a virtual reality world according to claim 18 or 19,
**characterised in that**
a future development of a technical analysis data value is estimated by at least one characteristic pattern (51, 52, 53) displayed in the virtual reality world and obtained from past values of the respective technical analysis data by means of a Fourier Transformation.

21. Method according to anyone of claims 18 to 20,
characterised in that
the time constant of at least one periodic cycle displayed in addition to the original technical analysis data is prefixed.

22. Computer software program adapted to perform a method according to one of the claims 1 to 21 when executed by a computing device.

23. Computer readable medium having thereon a software program according to claim 22.

24. Device for the representation of technical analysis data in a virtual reality world (10) having three coordinates (11, 12, 13) on a display, wherein
a respective technical analysis parameter (14, 15, 16) is associated with each of the coordinates, and
technical analysis data are represented both by the spatial position and dimensions of three dimensional data bodies (17).
